# DEMANDE DE BREVET EUROPEEN

(11) **EP 1 598 238 A1**
(43) Date de publication de la demande: **23.11.2005**
(21) Numéro de dépôt: 05300351.3
(22) Date de dépôt: 03.05.2005
(51) Int. Cl.: B60R 7/04

(54) **Agencement d'un rangement dans un véhicule automobile**

(30) Priorité: 17.05.2004 FR 0450962
(71) Demandeur: Renault s.a.s., 92100 Boulogne Billancourt (FR)
(72) Inventeur: MASSON, Xavier, 78310, MAUREPAS (FR)

(57) **Abrégé**

Agencement d'un rangement dans un véhicule automobile, comportant un boîtier de rangement obturé par une façade (3) mobile, caractérisé en ce que la façade (3) comporte une façade extérieure (30) montée à mobilité sur le boîtier de rangement (2) par l'intermédiaire soit d'une interface (31) formant un habillage de la face interne de la façade extérieure (30) permettant un mouvement de pivotement autour d'un axe transversal (XX') à l'ouverture d'accès de la zone de rangement, ou soit d'une interface (40) formant une structure de tiroir (4) permettant un mouvement de translation selon une direction perpendiculaire à l'ouverture d'accès de la zone de rangement.

## Description

L'invention concerne un agencement d'un rangement dans un véhicule automobile et plus particulièrement d'une façade d'un rangement disposé sous un siège de véhicule automobile et pouvant recevoir soit une fonction tiroir soit un élément technique, dissimulé par un abattant.

Dans les véhicules automobiles il est souvent utilisé des rangements disposés sous les sièges des passagers. Ces rangements sont conformés de différentes façon et sont soit du type ouvert ou du type fermé. Les rangements du type ouvert sont en général formés d'un rebord, fixe sur le plancher, qui délimite une zone de réception d'objets. Ce type de rangement laisse les objets à la vue des personnes situées,à l'extérieur du véhicule. Les rangements du type fermé sont formés soit d'un tiroir coulissant sous le siège, le support du tiroir pouvant être fixé au plancher ou directement au siège, soit d'une façade basculante permettant un accès au volume de rangement.

De plus, des nouveaux équipements apparaissent dans les véhicules, tels que des chargeurs de disques audio ou vidéo, ou différents boîtiers électroniques nécessaires à la bonne utilisation du véhicule ou aux fonctions embarquées dans ce dernier. Ce type d'appareils, d'une taille standardisée, est généralement d'un volume conséquent et pose des problèmes d'intégration et d'accessibilité dans le véhicule. Il est particulièrement important de protéger les appareils audio et vidéo, de toutes convoitises et de les mettre à l'abri des regards des personnes extérieures tout en conservant un bon accès pour leur utilisation.

A cette fin ces appareils sont souvent dissimulés dans le coffre du véhicule ou dans des rangements qui sont réalisés spécialement pour les recevoir lorsque l'option est choisie par le client. De ce fait, la présence du rangement indique l'existence de l'appareil qui peut être convoité par des personnes extérieures. Le rangement dans le coffre ne rend pas aisé une utilisation régulière.

Afin de pallier ces inconvénients, l'invention a pour objet un agencement d'un rangement pouvant recevoir un tiroir muni d'une façade ou d'un abattant dissimulant un appareil nécessitant un accès régulier.

L'invention a également pour objet, une façade de rangement compatible avec une utilisation tiroir ou façade basculante, formant un abattant.

Selon une caractéristique de l'invention, la façade comporte une façade extérieure montée à mobilité sur le boîtier de rangement par l'intermédiaire soit d'une interface formant un habillage de la face interne de la façade extérieure permettant un mouvement de pivotement autour d'un axe transversal à l'ouverture d'accès de la zone de rangement, ou soit d'une interface formant une structure de tiroir permettant un mouvement de translation selon une direction perpendiculaire à l'ouverture d'accès de la zone de rangement.

Selon une autre caractéristique de l'invention, l'interface formant une contre façade, porte des tourillons qui sont montés à pivotement dans des paliers portés par le boîtier de rangement.

Selon une autre caractéristique de l'invention, la façade extérieure comporte des rebords latéraux qui recouvrent, lorsque ladite façade extérieure est en position d'obturation de l'accès au rangement, les paliers portés par le boîtier de rangement.

Selon une autre caractéristique de l'invention, la façade extérieure comporte des moyens communs de liaison destinés à recevoir les interfaces.

Selon une autre caractéristique de l'invention, la façade extérieure comporte une poignée de manipulation commune aux différents modes d'ouverture.

Selon une autre caractéristique de l'invention, la façade extérieure comporte un moyen de verrouillage qui coopère avec un moyen de réception formé dans un rebord du boîtier de rangement.

D'autres caractéristiques et avantages de l'invention apparaîtront à la lecture de la description d'exemples de réalisation d'un agencement d'un rangement dans un véhicule aux dessins annexés dans lesquels :
- La figure 1 représente une vue perspective du rangement avec sa façade en position fermée.
- La figure 2 représente une vue perspective du rangement comportant une façade pivotante.
- La figure 3 représente un détail de l'articulation de la façade pivotante.

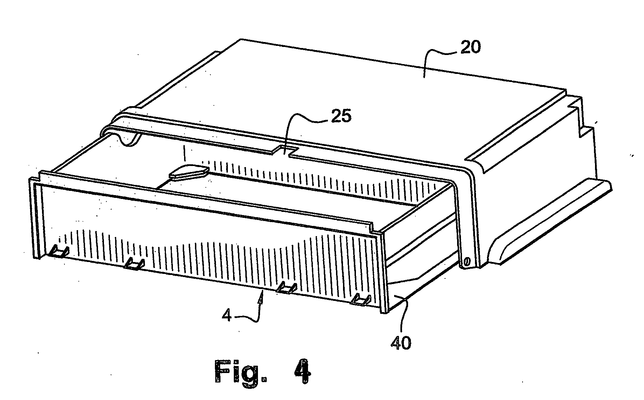

- La figure 4 représente le rangement pourvu d'un tiroir, sans la façade extérieure.
- La figure 5 représente une vue intérieure de la façade du rangement.

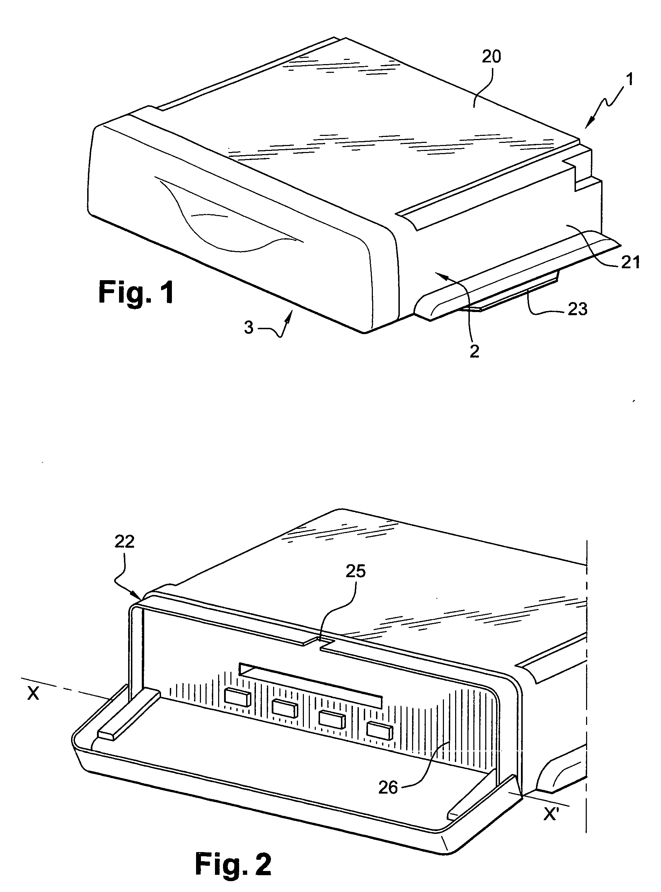

Tel que représenté à la figure 1, le véhicule comporte un rangement 1, qui peut-être par exemple localisé sous un siège. Dans notre exemple de réalisation, le rangement 1 est constitué en particulier d'un boîtier de rangement 2 et d'une façade 3 d'obturation du boîtier de rangement 2. Le boîtier 2 est formé d'une face supérieure 20 qui se prolonge latéralement par des parois verticales 21, qui délimitent l'ouverture d'accès à l'intérieur du rangement 1, une face arrière (non représenté) qui ferme le volume de rangement dans sa partie arrière. La délimitation de l'ouverture d'accès au volume de rangement forme un rebord 22 qui est recouvert par des bords 32 de la façade lors de la fermeture de l'accès au volume de rangement. Le boîtier de rangement 2 peut-être fixé au plancher du véhicule, par l'intermédiaire de pattes de fixation 23 portées par les parois latérales 21, ou à une partie du siège. Le boîtier de rangement 2 étant ouvert dans sa partie inférieure le fond est alors formé, dans notre exemple de réalisation, par le plancher du véhicule, qui peut être couvert d'un tapis.

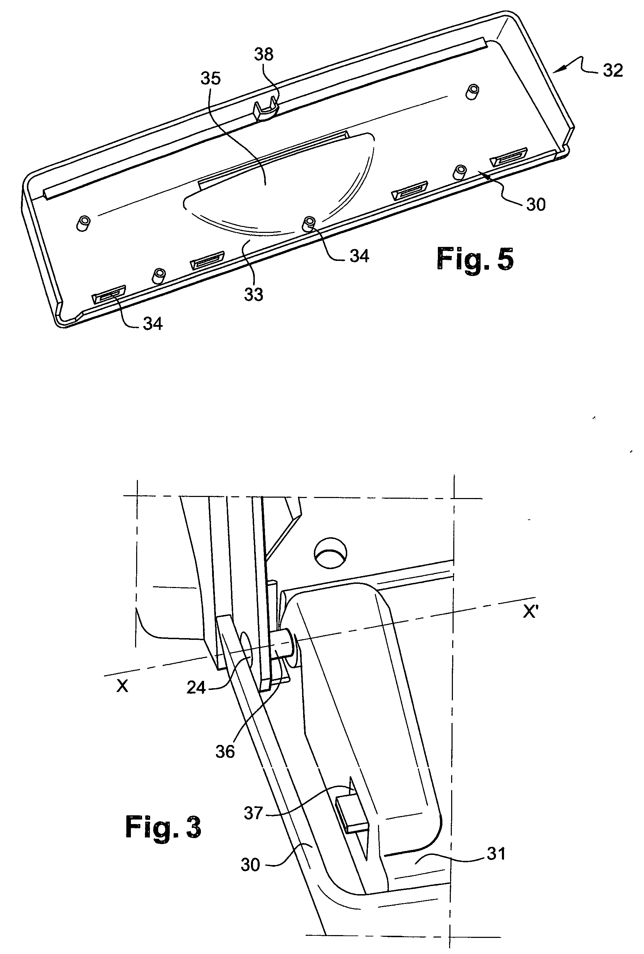

Tel que représenté aux figure 2 et 3, le rangement 1 comporte une façade 3 d'obturation pouvant s'ouvrir en pivotant autour d'un axe XX' localisé transversalement par rapport à l'ouverture d'accès à l'intérieur du boîtier de rangement 2. La façade 3 comporte au moins deux éléments constitutifs formés de la façade extérieure 30 et d'une interface 31. L'interface 31 est une contre façade qui forme un élément d'habillage de la partie intérieure de la façade extérieure 30. La façade extérieure 30 est formée d'une face frontale 33 portant, sur sa partie supérieure et ses extrémités latérales, des rebords 32, d'orientation sensiblement perpendiculaire à ladite face frontale 30. Le bord inférieur peut-être pourvu ou dépourvu d'un rebord. La façade extérieure 30 comporte sur sa face intérieure, tels que représenté à la figure 5, des moyens de liaison 34 avec la contre façade 31, ces moyens de liaison 34 permettant également le montage de la façade extérieure 30 sur une interface 40 formant la structure d'un tiroir 4. La façade extérieure 30 comporte également une poignée de manipulation 35 permettant l'ouverture de cette dernière quelque soit son mode d'ouverture.

La contre façade 31 telle que représenté à la figure 2, porte un tourillon 36, sur la partie inférieure de chacune de ses faces latérales 37. Ces tourillons 36 sont montés à pivotement dans des paliers 24 formés dans des parois latérales 21 du boîtier de rangement 2, et plus particulièrement sur l'extrémité inférieure des rebords 22. Afin de faciliter le montage des tourillons 36 dans les paliers 24, lesdits tourillons 36 peuvent être portés par une partie flexible de la face latérale 37 de la contre façade 31. A cette fin les faces latérales 37 de la contre façade 31 peuvent comporter localement des échancrures facilitant la flexion et le positionnement des tourillons 36 dans les paliers 24. Les rebords 22 portant les paliers 24 peuvent également comporter des aménagements permettant une certaine flexion lors du montage des tourillons 36 dans les paliers 24. La façade extérieure 30 comporte un moyen de verrouillage 38 qui coopère avec un moyen de réception 25 formé dans un rebord 22 du boîtier de rangement 2. Tel que représenté à la figure 2, le rangement reçoit un appareil 26, par exemple un lecteur audio ou vidéo. Le basculement de la façade permet l'accès aux fonctions de l'appareil 26.

Lors de la fermeture de la façade extérieure 30, l'extrémité de l'axe de pivotement 36 est dissimulé par les rebords latéraux 32 de la façade extérieure 30 qui recouvrent les paliers 24. Ainsi de l'extérieur il est impossible de déterminer si le rangement comporte un tiroir ou un abattant, cachant un appareillage optionnel.

Dans le cas de l'utilisation d'un tiroir 4, la façade extérieure 30 est directement fixée sur la structure 40 du tiroir 4 par l'intermédiaire d'une partie ou de l'ensemble des moyens de liaison 34 utilisés pour la fixation de la contre façade 31. Le moyen de verrouillage 38 peut être également utilisé pour maintenir le tiroir en position de fermeture.

Selon une autre variante de réalisation (non représenté), l'abattant peut être articulé au niveau de sa partie supérieure au lieu de sa partie inférieure. Le moyen de verrouillage 34 est alors inversé ou déplacé sur les parties latérales du rebord 22.

## Revendications

1. Agencement d'un rangement dans un véhicule automobile, comportant un boîtier de rangement obturé par une façade (3) mobile, **caractérisé en ce que** la façade (3) comporte une façade extérieure (30) montée à mobilité sur le boîtier de rangement (2) par l'intermédiaire soit d'une interface (31) formant un habillage de la face interne de la façade extérieure (30) permettant un mouvement de pivotement autour d'un axe transversal (XX') à l'ouverture d'accès de la zone de rangement, ou soit d'une interface (40) formant une structure de tiroir (4) permettant un mouvement de translation selon une direction perpendiculaire à l'ouverture d'accès de la zone de rangement.

2. Agencement d'un rangement selon la revendication 1, **caractérisé en ce que** l'interface (31) formant une contre façade, porte des tourillons (36) qui sont montés à pivotement dans des paliers (24) portés par le boîtier de rangement (2).

3. Agencement d'un rangement selon la revendication 2, **caractérisé en ce que** la façade extérieure (30) comporte des rebords latéraux (32) qui recouvrent, lorsque ladite façade extérieure (30) est en position d'obturation de l'accès au rangement, les paliers (24) portés par le boîtier de rangement (2).

4. Agencement d'un rangement selon la revendication 2, **caractérisé en ce que** la façade extérieure (30) comporte des moyens communs de liaison (34) destinés à recevoir les interfaces (31, 40).

5. Agencement d'un rangement selon l'une quelconque des revendications précédentes, **caractérisé en ce que** la façade extérieure (30) comporte une poignée de manipulation (35) commune aux différents modes d'ouverture.

6. Agencement d'un rangement selon l'une quelconque des revendications précédentes, **caractérisé en ce que** la façade extérieure (30) comporte un moyen de verrouillage (38) qui coopère avec un moyen de réception (25) formé dans un rebord (22) du boîtier de rangement (2).
